Europäisches Patentamt

European Patent Office

Office européen des brevets

(11) Veröffentlichungsnummer : **0 053 734**
**B1**

(19)

(12) **EUROPÄISCHE PATENTSCHRIFT**

(45) Veröffentlichungstag der Patentschrift :
18.09.85

(51) Int. Cl.⁴ : **G 11 B 31/00, G 08 G 1/09**

(21) Anmeldenummer : **81109518.1**

(22) Anmeldetag : **05.11.81**

(54) Einrichtung zum Speichern und Abhören von Verkehrsmeldungen.

(30) Priorität : 02.12.80 DE 3045380

(43) Veröffentlichungstag der Anmeldung :
16.06.82 Patentblatt 82/24

(45) Bekanntmachung des Hinweises auf die Patenterteilung : 18.09.85 Patentblatt 85/38

(84) Benannte Vertragsstaaten :
**AT CH FR GB IT LI**

(56) Entgegenhaltungen :
DE-A- 2 032 185
DE-A- 2 725 050
GB-A- 1 512 192
US-A- 3 869 723
RUNDFUNKTECHNISCHE MITTEILUNGEN, Band 20,
Oktober 1976, HAMBURG (DE) K. ALTMANN et al.:
"Aufzeichnung und Abtastung des Zeitkodes" Seiten
188-194
PATENTS ABSTRACTS OF JAPAN, Band 1, Nummer
123, 17. Oktober 1977, Siete 5172E77
FUNKSCHAU, Band 59, 1. Dezember 1978, MÜNCHEN
(DE) D. HEISS: "ARI-Infothek im Auto- eine Entwicklungsstudie" Seite 1263

(73) Patentinhaber : **Blaupunkt-Werke GmbH**
**Robert-Bosch-Strasse 200**
**D-3200 Hildesheim (DE)**

(72) Erfinder : **Diepholz, Tilo, Dipl.-Ing.**
**Struckmannstrasse 7**
**D-3200 Hildesheim (DE)**

(74) Vertreter : **Eilers, Norbert, Dipl.-Phys.**
**Blaupunkt-Werke GmbH Robert-Bosch-Strasse 200**
**D-3200 Hildesheim (DE)**

## Beschreibung

Die Erfindung bezieht sich auf ein Aufnahme-/Wiedergabegerät nach dem Oberbegriff des Anspruches 1.

Ein wichtiges Mittel zur Information der Verkehrsteilnehmer über die Verkehrslage und evtl. Verkehrsstörungen sind die von verschiedenen Rundfunksendern überregional und regional ausgestrahlten Verkehrsnachrichten, die ein Kraftfahrer in seinem Autoradio empfangen kann.

Die für die regionale Rundfunkversorgung besonders geeigneten UKW-Sender, die regelmäßig Verkehrsinformationen übertragen, strahlen ständig eine für das gesamte Sendernetz übereinstimmende Senderkennung und daneben eine regional unterschiedliche Bereichskennung aus. Eine ebenfalls für das gesamte Sendernetz übereinstimmende Durchsagekennung wird nur während der Dauer einer Verkehrsdurchsage ausgestrahlt. In einem langjährig erprobten Verkehrsfunksystem werden Kennfrequenzen benutzt, die sämtlich durch Frequenzvervielfachung bzw. Frequenzteilung von der an allen UKW-Sendern als Pilotton für Stereosendungen zur Verfügung stehenden 19-kHz-Frequenz abgeleitet sind.

Überregionale Verkehrsnachrichten werden daneben noch heute über im Mittel- und Langwellenbereich arbeitende Sender mit Amplituden-Modulation (AM) ausgestrahlt. Bei AM-Sendern wird als Kennung vor und nach der Sendung einer Verkehrsnachricht ein bestimmtes Ton-Signal unterschiedlicher Dauer ausgestrahlt, um Beginn und Ende der Verkehrsdurchsage zu kennzeichnen.

Elektronisch auswertbare Kennungen von Verkehrsnachrichten sind auch eine notwendige Voraussetzung für das automatische Aufzeichnen von Verkehrsdurchsagen und die dadurch erweiterten Informationsmöglichkeiten für Kraftfahrer.

Einrichtungen zum automatischen Aufzeichnen von Verkehrsnachrichten sind beispielsweise als sogenannte Infotheken bekannt geworden, die an Autobahn-Raststätten aufgestellt werden und an welchen die Kraftfahrer automatisch aufgezeichnete Verkehrsdurchsagen abhören können.

Um die Informationsmöglichkeiten noch weiter zu verbessern, sind auch schon Überlegungen angestellt worden (Funkschau 1978, Heft 25, S. 1263), Verkehrsmeldungen mit Hilfe von Recordern in Verbindung mit sogenannten Verkehrsfunkempfängern, das sind Rundfunkempfänger, insbesondere Autoradios, mit einem eingebauten Verkehrsfunkdecoder, automatisch aufzuzeichnen, wobei die Durchsagekennung über eine Logikschaltung den Motor des Cassettenlaufwerks steuert.

Zur Vorbereitung einer Aufnahme ist es hierbei notwendig, in den Recorder eine Leercassette einzulegen und den Recorder in Aufnahmebereitschaft zu bringen. Der Motor des Cassettenlaufwerks erhält dann während der Dauer der Durchsagekennung, d. h. während einer Verkehrsdurchsage, über die Logikschaltung Spannung und bleibt am Ende der Ausstrahlung der Durchsagekennung wieder stehen. Ferner wird mit Hilfe der Durchsagekennung ein Flip-Flop gesetzt, das eine Anzeige auslöst, die über das Flip-Flop auch nach Beendigung der Verkehrsmeldung erhalten bleibt. Diese Anzeige macht den Kraftfahrer darauf aufmerksam, daß während seiner Abwesenheit eine Verkehrsmeldung aufgenommen worden ist, die er dann beliebig oft abhören kann.

Der geräteseitige Aufwand für die Logikschaltung dieses mit einem üblichen Cassettenrecorder ausführbaren Vorschlages ist zwar verhältnismäßig gering, erfordert aber die Verwendung einer Leercassette zum Aufzeichnen der Verkehrsmeldungen. Diese Notwendigkeit ist deshalb nachteilig, weil sie das Abhören von Musikcassetten verhindert, wenn Verkehrsmeldungen aufgezeichnet werden sollen, damit man eine beispielsweise wegen einer kritischen Verkehrssituation nicht genau verstandene Meldung wiederholen lassen kann.

Die Einrichtung gemäß der vorliegenden Erfindung gestattet es, eintreffen Verkehrsmeldungen zu jedem Zeitpunkt und bei jedem Betriebszustand auch auf bespielte Musikcassetten speichern zu können, ohne die vorhandene Aufzeichnung zu beeinträchtigen.

Diese Aufgabe wird durch die im Kennzeichen des Anspruchs 1 angegebenen Merkmale gelöst.

Vorteilhafte Ausgestaltungen und Weiterbildungen der Erfindung sind in den Unteransprüchen angegeben.

Es ist an sich bekannt, (GB-A-1 512 192) in dem Zwischenraum zwischen den beiden Nutzsignalspuren einer Kassette zugleich mit dem Nutzsignal auch Kontrollsignale aufzuzeichnen, unter anderem, um das spätere Wiederauffinden bestimmter Bandstellen zu erleichtern. Dazu sind die Magnetköpfe für das Nutzsignal und das Kontrollsignal in einem Gehäuse vereinigt und werden auch gleichzeitig zum Schreiben der Nutz- und Kontrollsignale bzw. zum Lesen aufgezeichneter Signale eingeschaltet.

Die Erfindung zeichnet sich demgegenüber dadurch aus, daß ein gleichzeitiges Abhören des Nutzsignals und eine Aufzeichnung einer Verkehrsinformation möglich ist, ohne die bestehende Musikaufzeichnung zu beeinträchtigen.

Die Tonköpfe heute üblicher Cassettenlaufwerke sind so bemessen, daß beim Bespielen von Leercassetten zwischen den Aufzeichnungsspuren auf der oberen und unteren Bandhälfte ein Rasen frei bleibt, dessen minimale Breite durch Normvorschriften auf 480 µm festgelegt ist. Bei kommerziell bespielten Musikcassetten liegt die Rasenbreite sogar bei 560 µm.

Bei diesen festliegenden Rasenbreiten gewährleistet eine im Bereich zwischen etwa 150 und

200 μm liegende Spurbreite einer erfindungsgemäßen Aufzeichnung von Verkehrsdurchsagen einen ausreichenden Störabstand zu den benachbarten Aufzeichnungsspuren der oberen und unteren Bandhälfte. Diese Spurbreite kann ohne weiteres eingehalten werden, wenn als zusätzlicher Aufnahme/Wiedergabekopf für das Aufzeichnen und Abhören von Verkehrsdurchsagen ein sogenannter Videokopf eingesetzt wird, wie er als rotierender Magnetkopf in Videoaufzeichnungsgeräten schon in Ausführungen bekannt ist, die eine einwandfreie Aufzeichnung und Abtastung von Spurbreiten von weniger als 100 μm ermöglichen.

Die Verwendung eines solchen Magnetkopfes als Aufnahme/Wiedergabekopf und eines entsprechend dimensionierten Elektromagneten als Löschkopf gestattet also in einer erfindungsgemäßen Einrichtung die Einhaltung eines genügenden Störabstandes einer Aufzeichnung auf dem Rasen des Tonbandes ohne Übersprechen auf die benachbarten Tonspuren bei der Aufnahme und ohne Beeinträchtigung einer Aufzeichnung in den benachbarten Tonspuren beim Löschen einer auf den Rasen des Tonbandes aufgezeichneten Verkehrsdurchsage.

Die am häufigsten eingesetzten, weltweit eingeführten Tonbandcassetten besitzen ein Cassettengehäuse genormter Bauart und Größe mit zwei achsparallel nebeneinander liegenden Bandspulen für das in dem Cassettengehäuse über Umlenkmittel zwischen den Bandspulen entlang der Cassettenstirnwand eingeführte Tonband, wobei in der Mitte der Cassettenstirnwand eine Öffnung für den Eintritt des für Normalbetrieb des Cassettenlaufwerks benutzten Tonkopfes und zwei spiegelsymmetrisch von der etwa gleich großen Mittelöffnung entfernt liegende Öffnungen für den Eintritt einer zum jeweiligen Tonwellenantrieb gehörenden Gummiandruckrolle und/oder eines Löschkopfes vorhanden sind. Zwischen dieser Mittelöffnung und den seitlichen Öffnungen sind in der Cassettenstirnwand zwei weitere, etwas kleinere Öffnungen ausgespart, die bei bekannten Geräten den Eintritt einer Bandführung und/oder eines zusätzlichen Tonkopfes ermöglichen, sogenannte Referenzlöcher. Ferner weisen diese auch als CC-Cassetten bekannten Tonbandcassetten zu den Bandspulen achsparallele Tonwellen-Durchgangsöffnungen auf, die mit gleichen Abständen von den Seitenwänden und der Stirnwand des Cassettengehäuses jeweils im Bereich der Öffnungen für den Eintritt der Gummiandruckrolle angeordnet sind.

Bei den Autoreverse-Laufwerken sind die beiden außen liegenden Öffnungen in der Stirnwand der Cassette durch die Gummiandruckrolle für die beiden Tonwellenantriebe besetzt. Es ist auch schon ein Autoreverse-Laufwerk bekannt, bei dem ein für den Normalbetrieb vorgesehener Löschkopf neben der Gummiandruckrolle angeordnet ist, und durch die gleiche Öffnung der Cassette mit dem Band in Berührung gebracht werden kann.

Bei einer bevorzugten Auführungsform der erfindungsgemäßen Einrichtung sind deshalb die zusätzlichen Magnetköpfe für die Aufnahme und Wiedergabe bzw. für die Löschung einer Verkehrsdurchsage auf dem Rasen des Cassettentonbandes vorzugsweise so auf Kopfträgern des Cassettenlaufwerks angeordnet, daß sie durch die sog. Referenzlöcher zwischen der Mittelöffnung und den außen liegenden Öffnungen in der Cassettenstirnwand an das Tonband einer eingelegten Cassette herangeführt werden können.

Bei einer besonders vorteilhaften Ausgestaltung der zusätzlichen Magnetköpfe sind deren Gehäuse gleichzeitig als Bandführungen ausgebildet, die mit gerätefesten Bandführungen des Cassettenlaufwerks, die in entsprechenden Öffnungen einer eingelegten Cassette eintreten, zusammenwirken und für die gewünschte Führung bzw. Umlenkung des an den Antriebsorganen und den Köpfen vorbeilaufenden Bandes sorgen.

Die Funktion des erfindungsgemäßen Systems setzt lediglich voraus, daß eine Cassette in das Laufwerk der erfindungsgemäßen Einrichtung eingelegt ist und hat den Vorteil, daß unter dieser einfachen Bedingung grundsätzlich alle eintreffenden Verkehrsnachrichten auf dem Rasen des Tonbandes abgespeichert werden können.

Wenn gerade eine Cassette gehört wird, wird beim Empfang einer Durchsagekennung im Verkehrsfunkempfänger dessen Tonbandgeräteanschluß mit der Aufnahmeelektronik und diese mit dem zusätzlichen Aufnahmekopf verbunden.

Das erfindungsgemäße System hat also den Vorteil einer einwandfreien Information des Kraftfahrers auch in schwierigen Verkehrssituationen, in denen sich der Kraftfahrer nicht auf die Originaldurchsage der Nachricht konzentrieren kann.

Die Benutzung des Rasens zwischen den Aufzeichnungsspuren des Tonbandes reicht dabei trotz der geringen Spurbreite in jedem Fall für eine einwandfreie Unterrichtung des Kraftfahrers aus, da für derartige Durchsagen Telefonqualität ausreicht.

Die automatische Steuerung der erfindungsgemäßen Einrichtung erfolgt mit Hilfe einer Logikschaltung, die bei einer bevorzugten Ausführungsform Teil eines Mikroprozessors sein kann. Als Steuersignale dienen dabei die mit einer Verkehrsnachricht empfangene und aufgezeichnete Durchsagekennung sowie weitere bei der beispielsweise über Drucktasten durchgeführten Bedienung des Gerätes auftretende Signale.

Weitere Vorzüge und Merkmale der Erfindung ergeben sich aus der nachfolgenden Beschreibung und der Zeichnung eines bevorzugten Ausführungsbeispiels der Erfindung. Es zeigen:

Figuren 1 und 2 eine stirnseitige Ansicht und eine Draufsicht einer handelsüblichen Tonbandcassette, wie sie bei der Erfindung vorzugsweise verwendet werden soll,

Figur 3 eine schematisch stark vereinfachte Darstellung einer Anordnung der Tonköpfe und Gummiandruckrollen in einem Autoreverse-Laufwerk zur Veranschaulichung der Zuordnung zu den stirnseitigen Öffnungen einer Tonbandcassette gemäß Fig. 1 und 2,

Figur 4 in vergrößertem Maßstab eine schematisch stark vereinfachte Darstellung eines Abschnittes des Cassettentonbandes zur Veranschaulichung der Zuordnung der Tonköpfe eines erfindungsgemäß ausgerüsteten Laufwerkes zu den in üblicher Weise auf dem Band zugeordneten Aufzeichnungsspuren, und

Figur 5 ein Blockschaltbild eines erfindungsgemäßen Recorders.

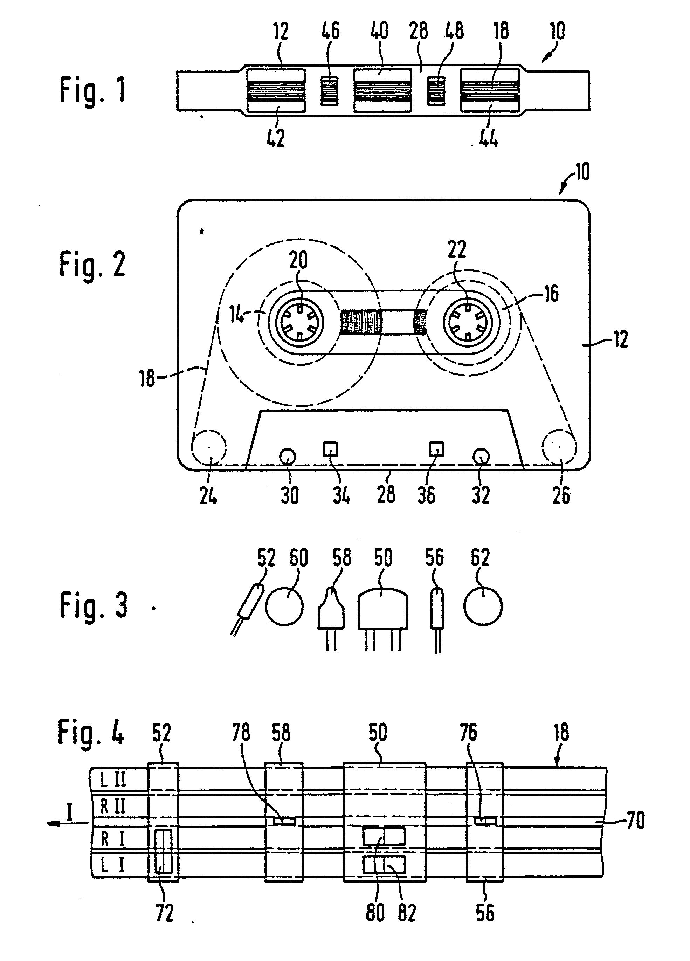

Eine in Figuren 1 und 2 gezeigte Tonbandcassette 10 besitzt ein Cassettengehäuse 12 genormter Bauart und Größe mit zwei achsparallel nebeneinander liegenden Banspulen 14 und 16 für ein daran mit seinen Enden befestigtes Tonband 18. Die Bandspulen sind mit einem Innenritzel 20 bzw. 22 ausgebildet, über welche das Tonband bei Schnellauf mit Hilfe von Antriebsnaben des Cassettenlaufwerks wechselseitig von einer Bandspule zur anderen Bandspule läuft. Zwischen den auf den Bandspulen 14 und 16 sitzenden Bandwickeln ist das Tonband 18 über ggf. drehbar im Cassettengehäuse angeordnete Umlenkmittel 24 und 26 entlang der Stirnwand 28 der Cassette geführt.

Hinter dem entlang der Cassettenstirnwand geführten Tonband besitzt das Cassettengehäuse 12 zu den Bandspulen achsparallele Durchgangsöffnungen 30 und 32, welche beim Einlegen der Cassette eine von einem Motor des Cassettenlaufwerks antreibbare Tonwelle aufnehmen. Zu den Tonwellen-Öffnungen 30 und 32 achsparallele Durchgangsöffnungen 34 und 36 nehmen bei eingelegter Cassette ggf. vorhandene Stifte auf, die als Bandführungsmittel von der Oberseite des Cassettenlaufwerks vorstehen.

In der Cassettenstirnwand 28, siehe Figur 1, ist eine Mittelöffnung 40 für den Eintritt eines für Normalbetrieb des Cassettenlaufwerks vorhandenen Tonkopfes, insbesondere eines kombinierten Aufnahme/Wiedergabekopfes, ausgespart. Spiegelsymmetrisch zu beiden Seiten dieser Mittelöffnung 40 angeordnete Aussparungen 42 und 44 in der Cassettenstirnwand dienen zum Eintritt einer Gummiandruckrolle eines für den Bandantrieb vorhandenen Tonwellenantriebes.

Die Öffnungen 40 bis 44 in der Cassettenstirnwand 28 sind jeweils etwa gleich groß.

Zwischen der Mittelöffnung 40 und den seitlich davon liegenden Öffnungen 42 und 44 sind jeweils etwas kleinere Öffnungen 46 bzw. 48 ausgespart, welche bei bekannten Cassettenlaufwerken beispielsweise einen gesonderten Aufnahmekopf oder ein Bandführungselement aufnehmen und auch als Referenzlöcher bezeichnet werden.

Figur 3 zeigt schematisch, wie die bei einem in der erfindungsgemäßen Gerätekombination vorgesehenen Laufwerk die Tonköpfe und Gummiandruckrollen mit Bezug auf die in der Cassettenstirnseite 28 vorhandenen Aussparungen einer eingelegten Tonbandcassette 10 nebeneinander angeordnet sein können. Ein Kombinationskopf 50 kann dabei für den üblichen Aufnahme- und Wiedergabebetrieb mit an sich bekannten Stellmitteln durch die Cassettenaussparung 40 an das Tonband 18 herangeführt werden.

Ein Löschkopf 52 für die Aufzeichnungsspuren kann in die Aussparung 42 in der Cassettenstirnwand 28 eintreten. Die erfindungsgemäß zusätzlich vorhandenen Magnetköpfe 56 und 58 sind zu beiden Seiten des Kombinationskopfes 50 angeordnet, wobei der Magnetkopf 56 mit einem Schreib/Lesesystem 76 durch die Referenzöffnung 48, und der Magnetkopf 58 mit einem Löschsystem 78 durch die Referenzöffnung 46 in der Cassettenstirnwand 28 an das Tonband 18 herangebracht werden kann, um je nach Betriebszustand eine Verkehrsinformation aufzuzeichnen, abzuhören oder zu löschen.

Eine mit 60 angedeutete Gummiandruckrolle für den Tonwellenantrieb ist bei einem erfindungsgemäß eingesetzten Cassettenlaufwerk vorzugsweise elektromechanisch steuerbar und kann wie der Löschkopf 52 durch das Fenster 42 der Cassettenstirnseite 28 an das Tonband 18 herangebracht werden, um dieses für den Antrieb an die Tonwelle des Tonwellenantriebes anzupressen.

Figur 4 zeigt einen vergrößert dargestellten Teilabschnitt eines Cassettentonbandes 18 mit einer für Stereoaufzeichnungen üblichen Anordnung der Aufzeichnungsspuren. Dabei ist die nach Kanälen R, L getrennte Aufzeichnung einer Stereoaufnahme, die bei Betrieb des Bandes in Richtung des Pfeiles I abgehört werden kann, auf der unteren Bandhälfte angeordnet, während die obere Bandhälfte eine entsprechende Aufzeichnung mit den Stereospuren RII und LII trägt. Ein zwischen den Aufzeichnungen auf der oberen und unteren Bandhälfte vorhandener, unbespielter Zwischenraum 70 bildet den sogenannten Rasen, der für die Erfindung wesentlich ist. Auf diesem Rasen wird gemäß der Erfindung mit Hilfe des Schreib/Lesesystems 76 des Magnetkopfes 56 eine Verkehrsinformation mit Durchsagekennung automatisch aufgezeichnet, die dann mit Hilfe des Löschsystems 78 des Magnetkopfes 58 wieder gelöscht werden kann, ohne beim Aufnehmen oder Löschen die auf der oberen und unteren Bandhälfte vorhandenen Stereoaufzeichnungen zu beeinträchtigen.

Zu diesem Zweck sind die Systeme 76 und 78 der erfindungsgemäß vorhandenen Magnetköpfe 56 und 58, deren Spalthöhe etwas kleiner gewählt ist als die genormte Breite des Rasens, unmittelbar dem Rasen zugeordnet.

Bei dem Kombinationskopf 50 und dem Löschkopf 52 handelt es sich um bekannte Köpfe, wobei der Kombinationskopf 50 bei der gezeigten Ausführungsform beispielsweise zwei den beiden Parallelspuren einer Bandhälfte zugeordnete Magnetsysteme 80, 82 besitzt.

Die Höhe der Gehäuse aller verwendeten Magnetköpfe ist vorzugsweise größer als die Breite des Tonbandes 18 gewählt, so daß die Stirnseite der mit dem Band in Berührung gebrachten Köpfe in vorteilhafter Weise als Bandführung wirkt.

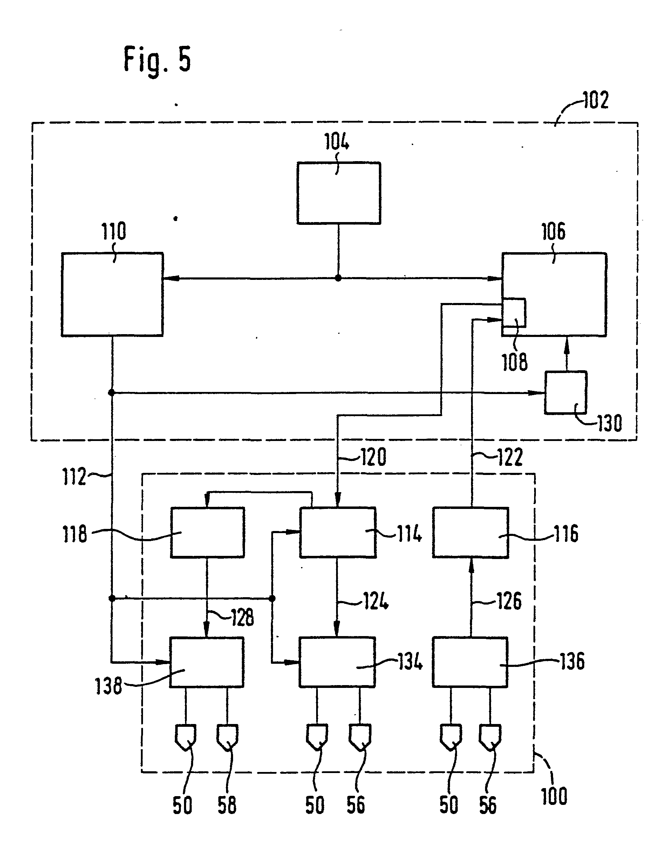

Figur 5 zeigt ein Blockschaltbild eines Recorders 100, der mit einem Verkehrsfunkempfänger 102 verbunden ist und von diesem die Schaltbefehle erhält.

Der Verkehrsfunkempfänger 102 enthält ein an sich bekanntes HF/ZF-Teil 104 und ein ebenso bekanntes NF-Teil 106 mit einem Tonbandanschluß 108. Die NF-Signale am Ausgang des Demodulators im HF/ZF-Teil 104 werden in bekannter Weise im Verkehrsfunkempfänger auch einem Verkehrsfunkdecoder 110 zugeführt und dort wie üblich ausgewertet.

Über die Befehlsleitung 112 werden dem Recorder 100 die Schaltbefehle des Verkehrsfunkdecoders 110 zugeleitet, während die in an sich bekannter Technik aufgebauten und schaltbaren Aufnahmeschaltungen 114 und Wiedergabeschaltungen 116 wie üblich über Verbindungsleitungen 120, 122 mit dem Tonbandanschluß 108 des Verkehrsfunkempfängers verbunden sind. Außerdem umfaßt der Recorder einen an sich bekannten Löschoszillator 118, der willkürlich bzw. automatisch von der Aufnahmeschaltung her schaltbar ist.

Die Aufnahmeschaltung 114 und die Wiedergabeschaltung 116 umfassen auch die üblichen Schalter zum willkürlichen Ein- und Ausschalten und für den Antrieb des Laufwerks. Diese üblichen Schalter sind in der Aufnahmeschaltung 114 bei dem hier dargestellten Ausführungsbeispiel der Erfindung zusätzlich über die Befehlsleitung 112 steuerbar.

Der Ausgang des Schreibverstärkers in der Aufnahmeschaltung 114 ist über eine Leitung 124 mit einem steuerbaren Umschalter 134 verbunden, an dessen Steuereingang die Befehlsleitung 112 angeschlossen ist. Der Eingang des Leseverstärkers in der Wiedergabeschaltung 116 ist über die Leitung 126 mit einem von Hand steuerbaren Umschalter 136 verbunden. Schließlich ist der Ausgang des Löschoszillators 118 über eine Leitung 128 mit einem steuerbaren Umschalter 138 verbunden, dessen Steuereingang ebenfalls an die Befehlsleitung 112 angeschlossen ist. Außerdem ist an die Befehlsleitung 112 noch ein Stummschalter 130 für den NF-Teil 106 des Verkehrsfunkempfängers 102 angeschlossen.

Der erste Anschluß des Umschalters 134 ist mit der Schreibwicklung des Kombinationskopfes 50, der zweite Anschluß mit der Schreibwicklung des Magnetkopfes 56 verbunden. Der erste Anschluß des Umschalters 136 ist mit der Lesewicklung des Kombinationskopfes 50, der zweite Anschluß mit der Lesewicklung des Magnetkopfes 56 verbunden. Der erste Anschluß des Umschalters 138 ist mit dem Löschkopf 52, der zweite Anschluß mit dem Magnetkopf 58 verbunden.

In der normalen Stellung verbinden die Umschalter 134, 136 die Wicklungen des Kombinationskopfes 50 mit den jeweiligen Verstärkern 114, 116 und der Umschalter 138 den Löschkopf 52 mit dem Löschoszillator 118. Sobald der Verkehrsfunkdecoder 110 eine Durchsagekennung ermittelt, wird über die Befehlsleitung 112 ein Schaltbefehl an die Umschalter 134, 138 gegeben. In bekannten Verkehrsfunkempfängern wird dieser Schaltbefehl allein dem Stummschalter 130 zugeführt, der dort eine Aufhebung der Stummschaltung des NF-Teils 106 bewirkt.

Dieser in an sich bekannter Weise erzeugte Schaltbefehl auf der Befehlsleitung 112 bewirkt eine Umschaltung der Umschalter 134 und 130, sobald zusätzlich zu den normalen NF-Signalen noch eine Durchsagekennung vom Verkehrsfunksender gesendet wird. Außerdem wird über die Befehlsleitung 112 die Aufzeichnungsschaltung 114 eingeschaltet. Damit wird die vom Sender durchgegebene Verkehrsmeldung zwangsweise auf dem Rasen des Tonbandes aufgezeichnet und eine etwa zuvor aufgezeichnete Verkehrsmeldung gelöscht.

Soll die so aufgezeichnete Verkehrsmeldung abgehört werden, dann ist neben der in üblicher Weise einzuschaltenden Wiedergabeschaltung zusätzlich der Umschalter 136 umzuschalten.

## Patentansprüche

1. Mit einem Verkehrsfunkempfänger verbundenes Aufnahme-/Wiedergabegerät für in Kassetten angeordnete Tonbänder mit zwei getrennten vorbespielten Aufzeichnungsspuren für Hin- und Rücklauf, dadurch gekennzeichnet, daß zur nachträglichen Aufzeichnung von Verkehrsnachrichten und deren späterer Wiedergabe ein zusätzlicher Magnetkopf in Höhe des zwischen den Aufzeichnungsspuren vorhandenen Zwischenraums in zugleich der Bandführung dienenden Gehäusen beweglich gelagert ist und daß der zu dem zusätzlichen Magnetkopf zugehörige Stromkreis für die Aufzeichnung einer Verkehrsnachricht durch den Decoder des Verkehrsfunkempfängers mit dem NF-Teil des Verkehrsfunkempfängers verbindbar ist, während die zu den Wiedergabeköpfen des Wiedergabegerätes zugehörigen Stromkreise in ihrem momentanen Schaltzustand verbleiben.

2. Aufnahme-/Wiedergabegerät nach Anspruch 1, dadurch gekennzeichnet, daß die Spalthöhe des zusätzlichen Magnetkopfes in einem Bereich zwischen 150 und 200 µm liegt.

3. Aufnahme-/Wiedergabegerät nach Anspruch 1 oder 2, dadurch gekennzeichnet, daß zum Löschen von Verkehrsnachrichten ein zusätzlicher Magnetkopf in Höhe des zwischen den Aufzeichnungsspuren vorhandenen Zwischenraums beweglich gelagert ist, der zugehörige Stromkreis für die Löschung durch den Decoder des Verkehrsfunkempfängers einschaltbar ist.

4. Aufnahme-/Wiedergabegerät nach einem der Ansprüche 1 bis 3, dadurch gekennzeichnet, daß der Magnetkopf (56) für Aufnahme/Wiedergabe und der Magnetkopf (58) zum Löschen auf gegenüberliegenden Seiten eines für Normalbetrieb vorhandenen Kombinationskopfes (50) durch mittensymmetrische angeordnete Aussparungen (46, 48) in der Stirnwand (28) des Gehäuses (12) der Kassette (10) an das Tonband (18) heranbewegbar sind.

## Claims

1. Recording/reproducing apparatus, connected to a radio traffic service receiver, for sound-recording tapes arranged in cassettes and having two separate prerecorded recording tracks for forward and reverse running, characterised in that, for the subsequent recording of traffic information and its later reproduction, an additional magnetic head is movably supported, in housings which are simultaneously used for tape guidance, at the level of the intermediate space existing between the recording tracks and that the circuit associated with the additional magnetic head can be connected, for recording a traffic message, to the LF section of the radio traffic service receiver by the decoder of the radio traffic service receiver, the circuits associated with the reproducing heads of the reproducing apparatus remaining in their instantaneous switched state.

2. Recording/reproducing apparatus according to Claim 1, characterised in that the gap level of the additional magnetic head is within a range of between 150 and 200 μm.

3. Recording/reproducing apparatus according to Claim 1 or 2, characterised in that, for the purpose of erasing traffic information, an additional magnetic head is movably supported at the level of the intermediate space existing between the recording tracks, and that the associated circuit for the erasure can be switched on by the decoder of the radio traffic service receiver.

4. Recording/reproducing apparatus according to one of Claims 1 to 3, characterised in that the magnetic head (56) for recording/reproducing and the magnetic head (58) for erasing can be moved towards the sound-recording tape (18) on opposite sides of a combined head (50), existing for normal operation, through openings (46, 48), arranged symmetrically to the centre, in the front (28) of the housing (12) of the cassette (10).

## Revendications

1. Appareil d'enregistrement et de lecture relié à un récepteur radio de trafic routier pour des bandes audio logées dans des cassettes et ayant deux pistes d'enregistrement susceptibles d'être pré-enregistrées de façon séparée en marche avant et en marche arrière caractérisé en ce que :
— pour un enregistrement supplémentaire d'informations relatives à l'état du trafic routier et leur lecture ultérieure, il est prévu une tête magnétique supplémentaire à la hauteur de l'intervalle existant entre les deux pistes d'enregistrement, qui est montée mobile dans les boîtiers servant en même temps au guidage de la bande et en ce que le circuit électrique correspondant à cette tête magnétique supplémentaire pour l'enregistrement d'une information relative à l'état du trafic routier peut être relié par le décodeur du récepteur radio de trafic routier à la partie BF du récepteur radio de trafic routier pendant que les circuits électriques correspondant aux têtes de lecture de l'appareil de lecture restent dans leur état de commutation momentané.

2. Appareil d'enregistrement et de lecture selon la revendication 1, caractérisé en ce que la hauteur de l'entrefer de la tête magnétique supplémentaire est comprise dans une plage entre 150 et 200 microns.

3. Appareil d'enregistrement et de lecture selon la revendication 1 ou 2, caractérisé en ce que :
— pour effacer les informations relatives à l'état du trafic routier, il est prévu une tête magnétique supplémentaire à la hauteur de l'intervalle existant entre les pistes d'enregistrement, tête montée mobile, et dont le circuit électrique correspondant peut être mis en œuvre pour l'effacement par le décodeur du récepteur radio de trafic routier.

4. Appareil d'enregistrement et de lecture selon l'une des revendications 1 à 3, caractérisé en ce que :
— la tête magnétique (56) pour l'enregistrement/lecture et la tête magnétique (58) pour l'effacement peuvent être mises contre la bande audio (18) des deux côtés d'une tête combinée (50) existant pour le fonctionnement normal, en passant dans des fenêtres (46, 48) symétriques par rapport à un plan, réalisées dans la face frontale (28) du boîtier (12) de la cassette (10).

Fig. 1

Fig. 2

Fig. 3

Fig. 4

## Fig. 5